# EUROPEAN PATENT APPLICATION

(11) **EP 4 787 194 A1**
(43) Date of publication of application: **05.08.2026**
(21) Application number: 25154779.0
(22) Date of filing: 29.01.2025
(51) Int. Cl.: G06F 16/9535, G06F 16/958

(54) **COMPUTER PROGRAM PRODUCT, COMPUTER-IMPLEMENTED METHOD AND SYSTEM FOR FACILITATING SEARCH ENGINE OPTIMIZATION**

(71) Applicant: Vasylenko, Igor, 6020 Emmen (CH)
(72) Inventor: Vasylenko, Igor, 6020 Emmen (CH)
(74) Representative: Keller Schneider Patent- und Markenanwälte AG

(57) **Abstract**

The invention relates to a computer program product for facilitating search engine optimization, which computer program product is configured to be executed on a computing device and comprises the following substructures: 1) an interface structure, with the interface structure being configured to receive a) at least one keyword element, with each keyword element comprising at least one keyword, b) search strategy instructions, c) a search depth *N, N* being a natural number greater than one, and d) visualization instructions; 2) a parsing structure configured to a) adapt a search engine based on the received search strategy instructions, b) query the adapted search engine with each keyword element of the received at least one keyword element at at least one point in time, wherein each query of the adapted search engine with a keyword element at a point in time of the at least one point in time provides a ranked list of search results provided by the adapted search engine in response to said keyword element at said point in time, and c) parse *N* first entries of each provided ranked list of search results, wherein each parsing provides *N* parsed entries, 3) a database structure configured to store in a database, for each query, (i) the *N* parsed entries corresponding to said query, (ii) the point in time of the at least one point in time when said query is carried out and (iii) a relative position of each parsed entry within the *N* parsed entries corresponding to said query, and 4) a visualization structure, with the visualization structure having access to the database structure, and with the visualization structure being configured to a) process the stored parsed entries in the database based on the received visualization instructions, the processing providing processed database information, and to b) provide displaying instructions to a display unit for displaying the processed database information on the display unit. The invention also relates to a computer-implemented method and to a system for facilitating search engine optimization.

## Description

### Technical Field

The invention relates to a computer program product for facilitating search engine optimization, to a computer-implemented method for facilitating search engine optimization and to a system for facilitating search engine optimization.

### Background Art

Search engine optimization is an important task of modern-day business to improve the quality and quantity of website traffic to a website of a company. To improve search rankings of a website in a search engine when the search engine is queried with relevant keywords, the content of the website may be suitably modified.

To help assess need of search engine optimization of a website and outcome with respect to search engine rankings after a modification of a website, data is required. Modern-day tools for search engine optimization typically lack comprehensive data and visualization capabilities for helping website designers or marketing divisions in companies to carry out search engine optimization efficiently, however; instead, search engine optimization as presently carried out is often a heuristic and cumbersome process.

### Summary of the Invention

It is the object of the invention to provide a computer program product, a computer-implemented method and a system for facilitating search engine optimization that mitigate at least some of the disadvantages of solutions as known in the prior art.

According to a first aspect of the invention, the invention relates to a computer program product for facilitating search engine optimization. The computer program product according to the first aspect of the invention is configured to be executed on a computing device and comprises the following substructures: 1) an interface structure, with the interface structure being configured to receive a) at least one keyword element, with each keyword element comprising at least one keyword, b) search strategy instructions, c) a search depth *N, N* being a natural number greater than one, and d) visualization instructions; 2) a parsing structure configured to a) adapt a search engine based on the received search strategy instructions, b) query the adapted search engine with each keyword element of the received at least one keyword element at at least one point in time, wherein each query of the adapted search engine with a keyword element at a point in time of the at least one point in time provides a ranked list of search results provided by the adapted search engine in response to said keyword element at said point in time, and c) parse N first entries of each provided ranked list of search results, wherein each parsing provides *N* parsed entries, 3) a database structure configured to store in a database, for each query, (i) the *N* parsed entries corresponding to said query, (ii) the point in time of the at least one point in time when said query is carried out and (iii) a relative position of each parsed entry within the *N* parsed entries corresponding to said query, and 4) a visualization structure, with the visualization structure having access to the database structure, and with the visualization structure being configured to a) process the stored parsed entries in the database based on the received visualization instructions, the processing providing processed database information, and to b) provide displaying instructions to a display unit for displaying the processed database information on the display unit.

Through the interface structure, data may be exchanged between an operating system running on the computing device and the inventive computer program product executed within the operating system. The operating system may provide input/output functionality from external hardware, e.g. a keyboard connected to the computing device or a further computing device connected in a networked manner to the computing device. The further computing device may in particular be embodied as the display unit, i.e. the computer program product may receive data as input through its interface structure from the display unit which data was first provided to the display unit. Accordingly, the computing device may be viewed as a server comprising a database and the display unit may be viewed as a client.

A keyword element may comprise one or more keywords, with each keyword corresponding to one word. Accordingly, a keyword element may be either a single word or a sentence comprising more than one word. To be relevant for facilitating search engine optimization of a website, the keyword elements are preferentially related to the content on the website for which a user of the computer program product may wish to carry out a search engine optimization.

A search engine may be queried using the at least one keyword. As search engine, any commercially available search engine may be used. Preferentially, a search engine is used that is widely used. Alternatively, if search engine optimization is to be carried out in a narrow domain in which a typical user employs a specialized search engine, the computer program product may query such a specialized search engine instead. The computer program product may be embodied such that a search engine that is to be be queried may be provided as input to the computer program product through its interface structure; alternatively, the search engine to be queried may be hard-coded into the computer program product.

In order to tailor search results provided by the search engine to a specific wanted use case, the search engine is adapted using the received search strategy instructions. The search strategy instructions may for example be used for customizing the search engine such that results from a wanted geographical region are preferentially returned by the search engine. The search strategy instructions may for example also be used for customizing the search engine such that results in a wanted language are preferentially returned by the search engine. The search strategy instructions may for example also be used for customizing the search engine such that results are preferentially returned by the search engine that are tailored to a specific type of user, e.g. a user that often visits websites in a specific domain of application; the search strategy instructions may be provided in the form of cookies, for example. The search strategy instructions may also be such that the search engine is adapted to provide as neutral results as possible. Through the search strategy instructions, a user of the computer program product may therefore tailor search results such that they mostly reflect search results that would be obtained by target customers of a website of the user for which the user may wish to carry out a search engine optimization.

Each query of the search engine with a keyword element of the at least one keyword element provides a ranked list of search results, which ranked list of search results may depend on a point in time at which the query is carried out. The computer program product may be such that for each keyword element, the adapted search engine is queried at a plurality of points in time, which plurality of points in time may be periodically distributed. The computer program product may for example be such that for each keyword element, the adapted search engine is queried each day. In case (i) M keyword elements are provided to the computer program product, *M* being a positive natural number, (ii) the search engine provides *L* search results in the ranked list of search results, *L* being a positive natural number, and (iii) the search engine is queried *T* times, i.e. at *T* different points in time and with *T* being a positive natural number, for each keyword element, in total *M*L*T* search results are obtained.

For each query of the adapted search engine with a keyword element, only the *N* first search results may be further considered. To make the output provided by the adapted search engine suitable for subsequent automatic processing, the computer program product parses the *N* first search results for each query. Instead of in total *M*L*T* search results as discussed above and as provided by the adapted search engine, only *M*N*T* search results may be further processed and parsed. The parsing separates the raw data obtained from the adapted search engine into its syntactic constituents. In case of a typical result obtained from a search engine, the parsing may provide a uniform resource locator and a brief description of the content of the linked search result, for example.

The search results provided by the adapted search engine for each query with a keyword element are ranked. Depending on the used search engine, some entries from the provided search results may correspond to paid entries, while other entries may be organic entries. The *N* first entries of each provided ranked list of search results may therefore either correspond to paid entries or to organic entries or to a combination thereof. In case paid entries are of lesser interest to a user of the computer program product, the computer program product may be such that a user may configure the computer program product such that paid entries in the ranked lists of search results are discarded.

The parsed *M*N*T* search results are then stored in a database, with access to the database being provided through the database structure of the computer program product. For each of the *M* keyword elements, the *N* parsed entries corresponding to each point in time of the *T* points in time are stored in the database together with the respective point in time at which they were queried. As the *N* parsed entries corresponding to one query are obtained at a same time, the *N* parsed entries of one ranked list of search results are stored together with a common point in time, i.e. the point in time is equal for all of the *N* parsed entries. Preferentially, the computer program product is configured such that adapted search engine is queried with each of the *M* keyword elements at a same time and in parallel: this way, the *N* parsed entries of all of the *M* keyword elements may be stored together with one point in time so that for *T* points in time only *T* points in time are stored. The adapted search engine may however also be queried in a temporally interleaved manner, with the *M* keyword elements being queried one after another before a next query iteration is started: this way, more points in time may be stored together with the *M***N* parsed entries. For each of the stored *N* parsed entries, a relative position is stored as well, with in total *M*N*T* relative positions being stored and with each relative position representing a ranked position of a parsed entry within the *N* parsed entries corresponding to one query with a keyword element.

The computer program product is preferentially embodied such that new parsed entries are appended to the parsed entries that are already present in the database so that the number of parsed entries as stored in the database may grow over time. In case of *M*N*(T-1)* stored parsed entries and further *M* queries at a *T*-th point in time, after storing the new *M***N* parsed entries, the number of stored parsed entries in the database may then grow to *M*N*T.*

The visualization structure of the computer program product is configured for enabling analysis of the data stored in the database. Depending on the visualization instructions provided to the computer program product through its interface structure, different aspects of the data stored in the database may be extracted, which different aspects may also be termed processed database information. The visualization structure is configured to send displaying instructions to the display unit on which the processed database information may be viewed by a user of the computer program product. These displaying instructions may be sent through the interface structure of the computer program product.

Due to the possibly large number of data stored in the database and the extensive customization and analysis options of the visualization structure, a user of the computer program product may quickly see how his own website may be ranking compared to other websites, in particular over time. Changes carried out to his own website may further be observed from the data stored in the database. Using the inventive computer program product, the user may therefore carry out informed search engine optimization for his own website.

In an embodiment of the computer program product according to the first aspect of the invention, the computer program product is configured to query the adapted search engine with each keyword element of the received at least one keyword element at periodically repeating points in time, and the computer program product is configured, for each keyword element of the received at least one keyword element, to 1) parse the *N* first entries of the provided ranked list of search results corresponding to said keyword element for each point in time of the periodically repeating points in time at which the corresponding query is carried out, and to 2) store in the database the *N* parsed entries corresponding to said keyword element for each point in time of the periodically repeating points in time at which the corresponding query is carried out together with (i) the corresponding points in time and (ii) for each point in time, the relative position of each parsed entry within the stored *N* parsed entries corresponding to said point in time.

In a further embodiment of the computer program product according to the first aspect of the invention, the received search strategy instructions comprises geographical information and the parsing structure is configured to adapt the search engine based on the geographical information.

In a further embodiment of the computer program product according to the first aspect of the invention, the received search strategy instructions comprise user personalization information and the parsing structure is configured to adapt the search engine based on the user personalization information.

In a further embodiment of the computer program product according to the first aspect of the invention, the received visualization instructions comprise selection information, wherein the visualization structure is configured such that it a) selects at least one stored parsed entry from the database based on the selection information, the selection providing the processed database information, and such that it b) provides such displaying instructions to the display unit that the selected at least one parsed entry and corresponding at least one relative position are displayed on the display unit.

Using the selection information, the visualization structure may be arranged such that for example only stored entries in the database are sent to the display unit that were queried within specified time intervals or such that for example only stored entries corresponding to a specific keyword element are sent to the display unit. In general, the computer program product may be such that the selection information may be used for selectively extracting entries from the database corresponding to any subset of data corresponding to currently stored parsed entries in the database. As selection information, uniform resource locators may be used as well, for example: in that case, stored parsed entries may be potentially extracted that correspond to queries of the adapted search engine with potentially more than one of the at least one keyword element. Different types of selection information may be freely combined in principle.

In a further embodiment of the computer program product according to the first aspect of the invention, the selection information comprises information on a keyword element of the at least one keyword element, wherein the visualization structure is configured such that the selected at least one stored parsed entry from the database corresponds to said keyword element.

In a further embodiment of the computer program product according to the first aspect of the invention, the received visualization instructions comprise color information, which received color information comprises at least two colors and two corresponding properties, wherein each color of the at least two colors encodes a respective possible property of a stored parsed entry in the database, and the visualization structure is configured to a) determine for each stored parsed entry in the database whether any property corresponding to the color information is fulfilled and to b), in case a property is fulfilled, assign the corresponding color to the respective stored parsed entry, the assignment providing the processed database information, and the visualization structure is configured to provide displaying instructions to the display unit such that each stored parsed entry to which a color is assigned and which is to be displayed on the display unit is displayed in conjunction with the assigned color.

Possible properties of stored parsed entries that may be encoded using colors are for example whether a stored parsed entry corresponds to a website of a friendly other company, or whether a stored parsed entry corresponds to a website of an affiliate company, or whether a stored parsed entry corresponds to a website of a user's own company, or whether a stored parsed entry corresponds to a website of a competitor, or whether a stored parsed entry corresponds to a neutral other website. If a uniform resource locator is used directly as selection information, stored parsed entries in the database that correspond to said uniform resource locator may also be visually encoded using a dedicated color.

By using such coloring schemes, a user of the computer program product may quickly assess the relevance of data stored in the database, thereby helping the user to assess whether action is needed for improving search rankings of his own website.

In a further embodiment of the computer program product according to the first aspect of the invention, the provided displaying instructions are such that the processed database information is displayed in tabular form on the display unit.

In case a uniform resource locator is used as selection information, the tabular form may be arranged as follows, for example: the rows of the table may be associated to different keyword elements of the at least one keyword element, wherein a query of the adapted search engine with said different keyword elements provided a search result corresponding to the uniform resource locator; the columns of the table may correspond to the N stored parsed entries corresponding to said different keywords that were obtained in the respective queries; this table may be based on queries that were carried out at a common point in time; for other points in time, the same layout of the table may be used as well. Table entries may be color coded as described above to help a user of the computer program product to assess quickly relevance of displayed table entries. For other types of selection information, different tabular forms of the displayed processed database information are feasible.

In a further embodiment of the computer program product according to the first aspect of the invention, the received visualization instructions comprise tracking information, with the tracking information comprising a) a keyword element of the at least one keyword element and b) content information relating to a possible content of a parsed entry, wherein the visualization structure is configured such that it selects at least one stored parsed entry and the corresponding at least one relative position from the database (i) corresponding to queries with said keyword element at the at least one point in time and (ii) having a same content as the content information provided with the tracking information, and wherein the visualization structure is configured to provide such displaying instructions to the display unit that the selected at least one relative position and the corresponding at least one point in time are displayed as a graph on the display unit.

The content information may correspond to a uniform resource locator and the keyword element to a keyword element that provided a search result corresponding to the uniform resource locator, for example. To provide such a keyword element and content information to the computer program product, the computer program product may be configured such that a user may click on a table entry as discussed above. The computer program product may provide displaying instructions to the display unit to display the relative position over time, i.e. at different points in time, of the stored parsed entries in the database corresponding to the uniform resource locator obtained when searched using the respective keyword element. Advantageously, a user of the computer program product may thus quickly assess temporal trends.

In a further embodiment of the computer program product according to the first aspect of the invention, the interface structure is configured to receive at least two keyword elements and the received visualization instructions comprise summarizing information, with the summarizing information comprising a) a subset of keyword elements of the at least two keyword elements and b) content information relating to a possible content of a parsed entry, wherein the visualization structure is configured such that it selects, for each point in time of the at least one point in time, stored parsed entries and the corresponding relative positions from the database (i) corresponding to queries with keyword elements from the subset of keyword elements at said point in time and (ii) having a same content as the content information provided with the summarizing information, wherein the visualization structure is configured to determine, for each point in time of the at least one point in time, from (i) the selected stored parsed entries corresponding to queries at said point in time and the corresponding relative positions and (ii) all stored parsed entries and their corresponding relative positions corresponding to queries with keyword elements in the subset of keyword elements at said point in time, a summarizing relative position of the selected stored parsed entries within all parsed entries corresponding to queries with keyword elements from the subset of keyword elements.

The computer program product may thus advantageously provide a user with information on how a particular website is ranked in a target group of keyword queries, for example.

In a further embodiment of the computer program product according to the first aspect of the invention, the interface structure is configured to receive the at least one keyword element, the search strategy instructions, the search depth N and the visualization instructions from an external information source, in particular embodied as a human user of the computer program product.

In a further embodiment of the computer program product according to the first aspect of the invention, the computer program product comprises as a further substructure an exporting structure and the interface structure further is configured to receive exporting instructions, wherein the exporting structure is configured to provide data export functionality from the database based on the exporting instructions.

The exporting structure may export data through the interface structure of the computer program product.

According to a second aspect of the invention, the invention relates to a computer-implemented method for facilitating search engine optimization, with the computer-implemented method comprising the following steps: 1) Receiving (i) at least one keyword element, with each keyword element comprising at least one keyword, (ii) search strategy instructions, (iii) a search depth *N, N* being a natural number greater than one, and (iv) visualization instructions; 2) Adapting a search engine based on the received search strategy instructions; 3) Querying the adapted search engine with each keyword element of the received at least one keyword element at at least one point in time, wherein each query of the adapted search engine with a keyword element at a point in time of the at least one point in time provides a ranked list of search results provided by the adapted search engine in response to said keyword element at said point in time; 4) Parsing *N* first entries of each provided ranked list of search results, wherein each parsing provides *N* parsed entries; 5) Storing in a database, for each query, (i) the *N* parsed entries corresponding to said query, (ii) the point in time of the at least one point in time when said query is carried out and (iii) a relative position of each parsed entry within the *N* parsed entries corresponding to said query; 6) Processing the stored parsed entries in the database based on the received visualization instructions, the processing providing processed database information; and 7) Providing displaying instructions to a display unit for displaying the processed database information on the display unit.

According to a third aspect of the invention, the invention relates to a system for facilitating search engine optimization, the system comprising 1) a computing device on which a computer program product according to the first aspect of the invention is provided, and 2) a display unit, which display unit is configured to display the processed database information based on the displaying instructions received from the computing device when the computer program product is executed.

### Brief description of drawings

**Fig. 1** shows a first screenshot of a computer program product according to the invention;
**Fig. 2** shows a second screenshot of a computer program product according to the invention;
**Fig. 3** shows a third screenshot of a computer program product according to the invention;
**Fig. 4** shows a fourth screenshot of a computer program product according to the invention;
**Fig. 5** shows a fifth screenshot of a computer program product according to the invention;
**Fig. 6** shows a sixth screenshot of a computer program product according to the invention;
**Fig. 7** shows a seventh screenshot of a computer program product according to the invention;
**Fig. 8** shows an eighth screenshot of a computer program product according to the invention;
**Fig. 9** shows a ninth screenshot of a computer program product according to the invention;
**Fig. 10** shows a tenth screenshot of a computer program product according to the invention; and
**Fig. 11** shows an eleventh screenshot of a computer program product according to the invention.

### Detailed description of drawings

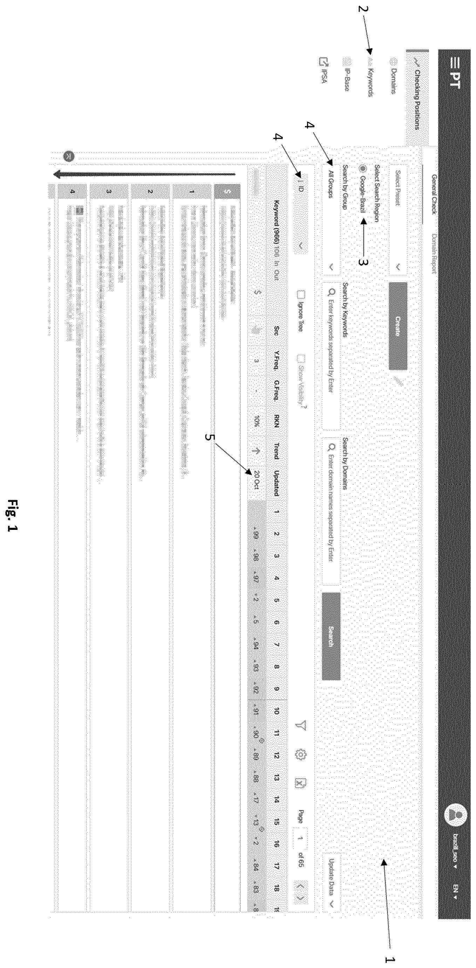

In all of Figs. 1 to 11, different screenshots of a graphical user interface of the computer program product according to the invention are shown. Through the graphical user interface, a user of the computer program product may be able to access the computer program product. The graphical user interface as shown in Figs. 1 to 11 may for example be displayed in a browser that is installed on a computer of the user; alternatively, the graphical user interface may also be provided through a dedicated program installed on the computer of the user. Other parts of the computer program product, specifically the parsing structure, the database structure and the visualization structure, may be executed on a remote computing device and exchange information with the computer of the user through a communication network.

Through the graphical user interface, the user may access the interface structure 1 of the computer program product; in turn, displaying instructions provided by the visualization structure of the computer program product to the display unit, which display unit may be the computer of the user, are used for displaying the processed database information on the computer of the user in the graphical user interface.

As shown in Figs. 1 to 6, 9 and 11, through the graphical user interface, the user may provide as search strategy instructions 3 geographical information to the computer program product. In Figs. 1 to 6, 9 and 11, the provided geographical information is such that the computer program product selects the Brazilian version of the google search engine for queries. As shown in Figs. 1 to 6, the user may provide at least one keyword element 2 through the graphical user interface. The computer program product may carry out repeated searches for the provided at least one keyword element 2 in the Brazilian version of the google search engine. In Figs. 1 to 7 and 11, search results obtained on October 20, 2024 with the Brazilian version of the google search engine are shown, with October 20, 2024 corresponding to a point in time 5 at which the computer program product queried the Brazilian version of the google search engine with the at least one keyword element. The computer program product may periodically query the Brazilian version of the google search engine with the at least one keyword element 2, for example once per day.

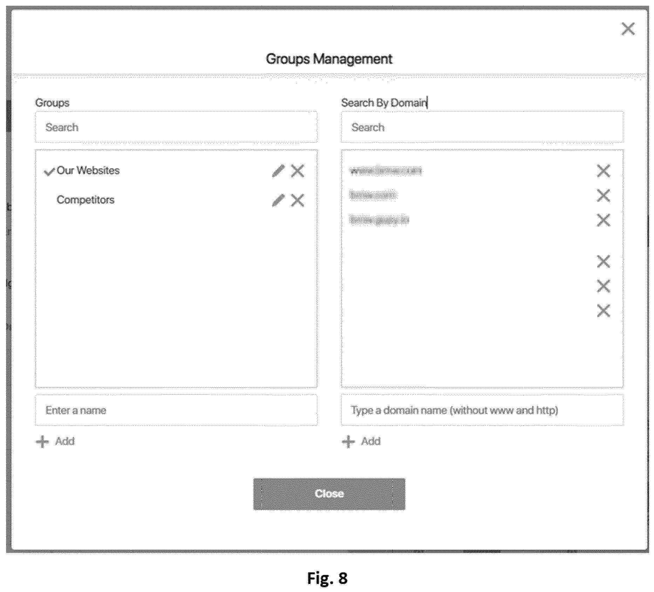

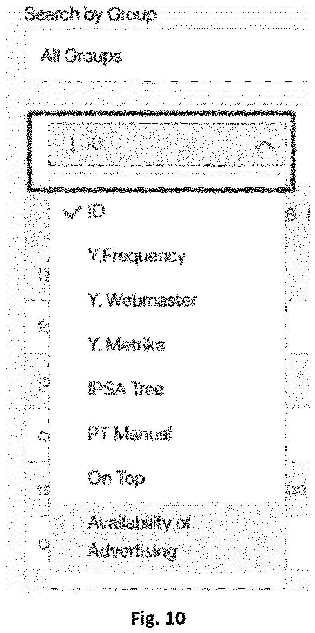

As shown in Figs. 1 to 11, different visualization instructions 4 provided by the user through the graphical user interface lead to different processed database information being displayed in the graphical user interface. In Fig. 1, for example, entries from all groups are displayed, with groups being explained below with respect to Fig. 8 and with the displayed entries being sorted according to (i) a point in time 5 at which they were queried and (ii) an ID characteristic, for example embodied as a google tag manager ID. Besides an ID characteristic, the entries may also be sorted according to other criteria as shown in Fig. 10.

As shown in Fig. 1, parsed entries that are stored in the database may be displayed on the computer of the user in tabular form. In vertical direction, first paid entries may be displayed that were obtained based on a query with a specific keyword element of the at least one keyword element at a specific point in time 5, paid entries being graphically indicated by the preceding '$' sign, and then organic entries of the same query may be displayed, with the organic entries being sorted according to ID. In horizontal direction, a same sorting may be employed. Through suitable color-coding of the entries in the table, information on the displayed data may be advantageously provided to the user of the computer program product.

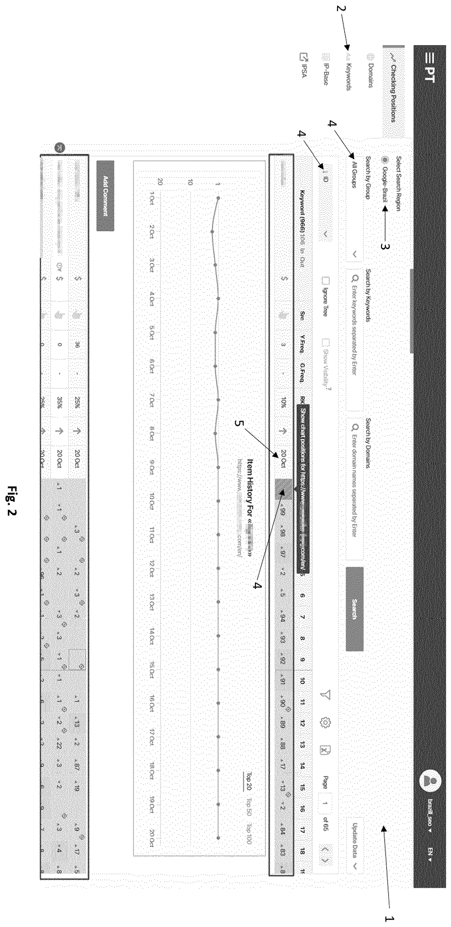

As visible in Fig. 2, the graphical user interface of the computer program product may enable a user to obtain visually information about website rankings over time of a specific website based on searches with a same keyword. The graphical user interface may be such that after clicking on an entry in the displayed table, the computer program product may determine rankings of the website that were obtained at different points in time based on the same keyword element.

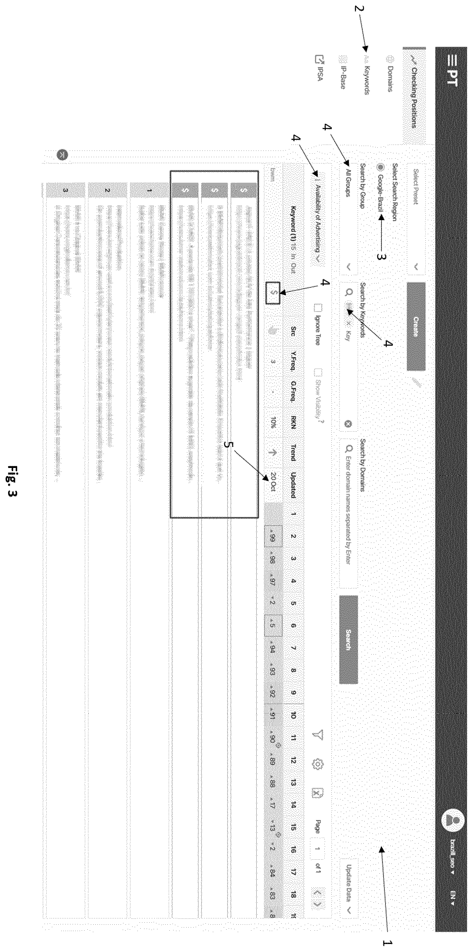

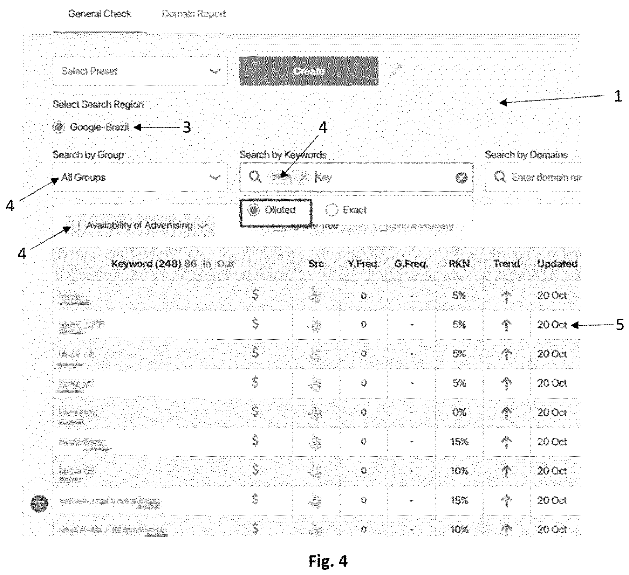

As shown in Fig. 3, the user may also provide visualization instructions 4 in terms of keywords to the computer program product so that only search results based on queries with the provided keywords are displayed. By clicking on the '$' sign, paid entries may also be graphically highlighted. As shown in Fig. 4, when providing keywords as visualization instructions 4, the user may choose either an exact match or a diluted match: in case an exact match is selected, only search results corresponding to keyword elements that exactly match the provided keywords are displayed, while in case a diluted match is selected, search results corresponding to keyword elements that comprise the provided keywords may be displayed.

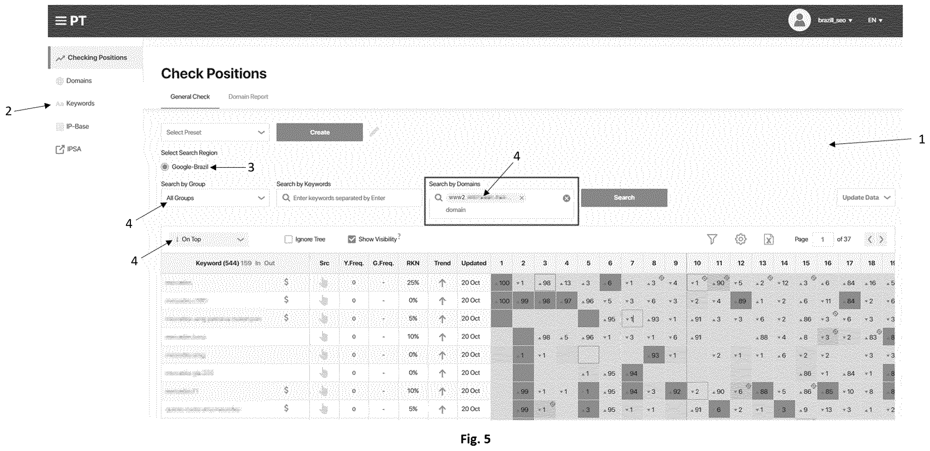

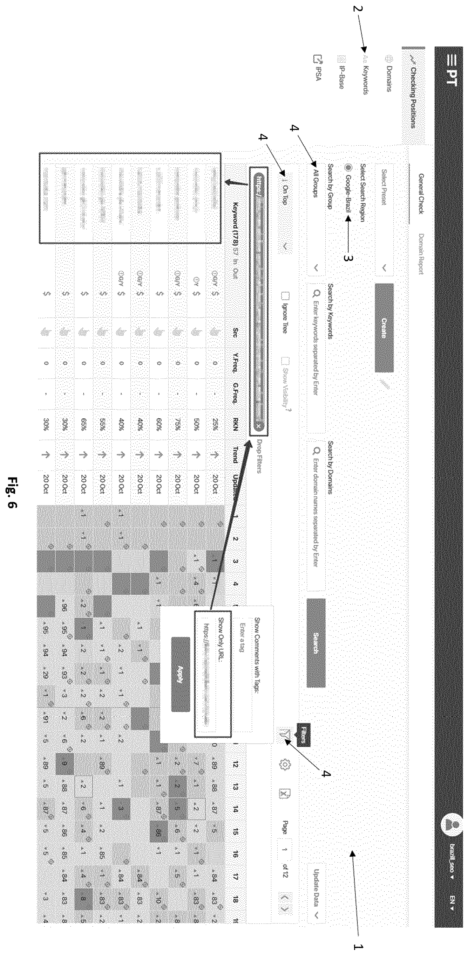

As visible in Fig. 5 and in Fig. 6, the user may also provide a uniform resource locator as visualization instruction 4 so that those keyword elements are displayed on the user's computer that, when querying the Brazilian version of the google search engine at a particular point in time, provided the uniform resource locator as search result.

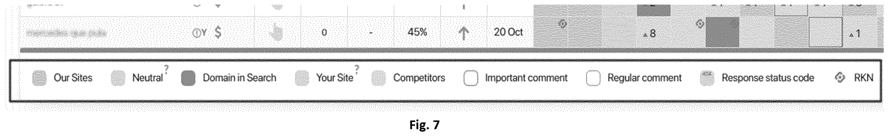

To enable the user to process the displayed information quickly, displayed data may be color-coded. In Fig. 7, for example, different colors corresponding to different properties of searched websites are shown, which different colors may be used for coloring entries in displayed tables.

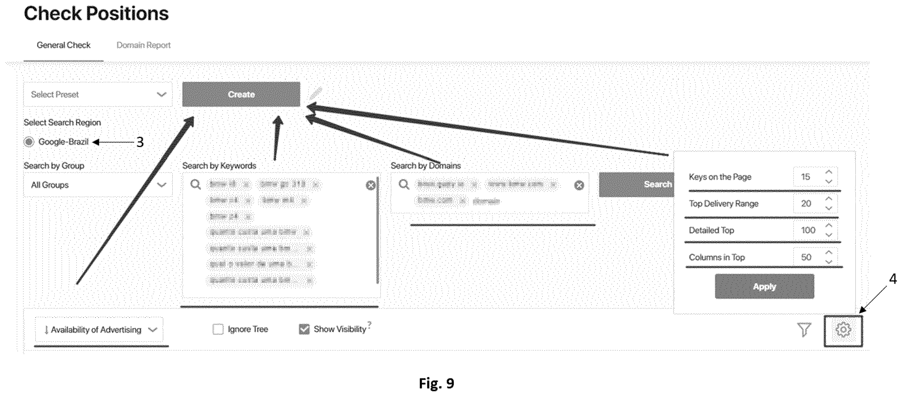

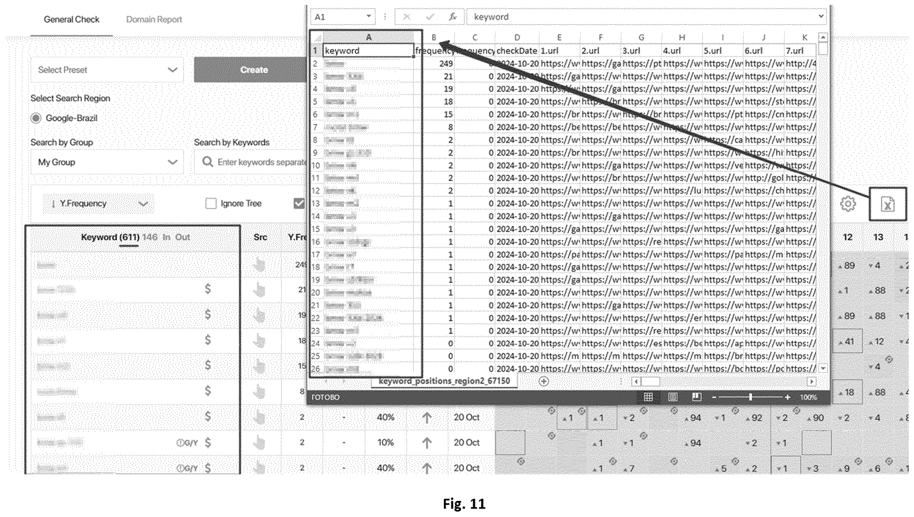

As shown in Fig. 8, the computer program product may provide group management functionality, which group management functionality may be used as visualization instructions 4. The user may for example define different groups, with a group comprising a set of websites. Fig. 9 shows that different types of visualization instructions 4 may be combined: the computer program product thereby provides a high degree of customizability to the user. As shown in Fig. 11, the user may choose to export data by clicking on an exporting icon that is shown in the graphical user interface.

## Claims

1. Computer program product for facilitating search engine optimization, with the computer program product being configured to be executed on a computing device and with the computer program product comprising the following substructures:
1) an interface structure, with the interface structure being configured to receive
a. at least one keyword element, with each keyword element comprising at least one keyword,
b. search strategy instructions,
c. a search depth *N, N* being a natural number greater than one, and
d. visualization instructions,
2) a parsing structure configured to
a. adapt a search engine based on the received search strategy instructions,
b. query the adapted search engine with each keyword element of the received at least one keyword element at at least one point in time, wherein each query of the adapted search engine with a keyword element at a point in time of the at least one point in time provides a ranked list of search results provided by the adapted search engine in response to said keyword element at said point in time, and
c. parse N first entries of each provided ranked list of search results, wherein each parsing provides N parsed entries,
3) a database structure configured to store in a database, for each query, (i) the N parsed entries corresponding to said query, (ii) the point in time of the at least one point in time when said query is carried out and (iii) a relative position of each parsed entry within the N parsed entries corresponding to said query, and
4) a visualization structure, with the visualization structure having access to the database structure, and with the visualization structure being configured to
a. process the stored parsed entries in the database based on the received visualization instructions, the processing providing processed database information, and to
b. provide displaying instructions to a display unit for displaying the processed database information on the display unit.

2. Computer program product according to claim 1, with the computer program product being configured to query the adapted search engine with each keyword element of the received at least one keyword element at periodically repeating points in time, and with the computer program product being configured, for each keyword element of the received at least one keyword element, to
1) parse the N first entries of the provided ranked list of search results corresponding to said keyword element for each point in time of the periodically repeating points in time at which the corresponding query is carried out, and to
2) store in the database the N parsed entries corresponding to said keyword element for each point in time of the periodically repeating points in time at which the corresponding query is carried out together with (i) the corresponding points in time and (ii) for each point in time, the relative position of each parsed entry within the stored N parsed entries corresponding to said point in time.

3. Computer program product according to claim 1 or 2, with the received search strategy instructions comprising geographical information and with the parsing structure being configured to adapt the search engine based on the geographical information.

4. Computer program product according to any one of the preceding claims, with the received search strategy instructions comprising user personalization information and with the parsing structure being configured to adapt the search engine based on the user personalization information.

5. Computer program product according to any one of the preceding claims, with the received visualization instructions comprising selection information, wherein the visualization structure is configured such that it a) selects at least one stored parsed entry from the database based on the selection information, the selection providing the processed database information, and such that it b) provides such displaying instructions to the display unit that the selected at least one parsed entry and corresponding at least one relative position are displayed on the display unit.

6. Computer program product according to claim 5, with the selection information comprising information on a keyword element of the at least one keyword element, wherein the visualization structure is configured such that the selected at least one stored parsed entry from the database corresponds to said keyword element.

7. Computer program product according to any one of the preceding claims, with the received visualization instructions comprising color information, which received color information comprises at least two colors and two corresponding properties, wherein each color of the at least two colors encodes a respective possible property of a stored parsed entry in the database, and with the visualization structure being configured to a) determine for each stored parsed entry in the database whether any property corresponding to the color information is fulfilled and to b), in case a property is fulfilled, assign the corresponding color to the respective stored parsed entry, the assignment providing the processed database information, and with the visualization structure being configured to provide displaying instructions to the display unit such that each stored parsed entry to which a color is assigned and which is to be displayed on the display unit is displayed in conjunction with the assigned color.

8. Computer program product according to claim 5, 6 or 7, with the provided displaying instructions being such that the processed database information is displayed in tabular form on the display unit.

9. Computer program product according to any one of the preceding claims, with the received visualization instructions comprising tracking information, with the tracking information comprising a) a keyword element of the at least one keyword element and b) content information relating to a possible content of a parsed entry, wherein the visualization structure is configured such that it selects at least one stored parsed entry and the corresponding at least one relative position from the database (i) corresponding to queries with said keyword element at the at least one point in time and (ii) having a same content as the content information provided with the tracking information, and wherein the visualization structure is configured to provide such displaying instructions to the display unit that the selected at least one relative position and the corresponding at least one point in time are displayed as a graph on the display unit.

10. Computer program product according to any one of the preceding claims, with the interface structure being configured to receive at least two keyword elements and with the received visualization instructions comprising summarizing information, with the summarizing information comprising a) a subset of keyword elements of the at least two keyword elements and b) content information relating to a possible content of a parsed entry, wherein the visualization structure is configured such that it selects, for each point in time of the at least one point in time, stored parsed entries and the corresponding relative positions from the database (i) corresponding to queries with keyword elements from the subset of keyword elements at said point in time and (ii) having a same content as the content information provided with the summarizing information, wherein the visualization structure is configured to determine, for each point in time of the at least one point in time, from (i) the selected stored parsed entries corresponding to queries at said point in time and the corresponding relative positions and (ii) all stored parsed entries and their corresponding relative positions corresponding to queries with keyword elements in the subset of keyword elements at said point in time, a summarizing relative position of the selected stored parsed entries within all parsed entries corresponding to queries with keyword elements from the subset of keyword elements.

11. Computer program product according to any one of the preceding claims, wherein the interface structure is configured to receive the at least one keyword element, the search strategy instructions, the search depth N and the visualization instructions from an external information source, in particular embodied as a human user of the computer program product.

12. Computer program product according to any one of the preceding claims, with the computer program product comprising as a further substructure an exporting structure and with the interface structure further being configured to receive exporting instructions, wherein the exporting structure is configured to provide data export functionality from the database based on the exporting instructions.

13. Computer-implemented method for facilitating search engine optimization, with the computer-implemented method comprising the following steps:
1) Receiving (i) at least one keyword element, with each keyword element comprising at least one keyword, (ii) search strategy instructions, (iii) a search depth *N, N* being a natural number greater than one, and (iv) visualization instructions;
2) Adapting a search engine based on the received search strategy instructions;
3) Querying the adapted search engine with each keyword element of the received at least one keyword element at at least one point in time, wherein each query of the adapted search engine with a keyword element at a point in time of the at least one point in time provides a ranked list of search results provided by the adapted search engine in response to said keyword element at said point in time;
4) Parsing N first entries of each provided ranked list of search results, wherein each parsing provides N parsed entries;
5) Storing in a database, for each query, (i) the N parsed entries corresponding to said query, (ii) the point in time of the at least one point in time when said query is carried out and (iii) a relative position of each parsed entry within the N parsed entries corresponding to said query;
6) Processing the stored parsed entries in the database based on the received visualization instructions, the processing providing processed database information; and
7) Providing displaying instructions to a display unit for displaying the processed database information on the display unit.

14. System for facilitating search engine optimization, the system comprising 1) a computing device on which a computer program product according to any one of claims 1 to 12 is provided, and 2) a display unit, which display unit is configured to display the processed database information based on the displaying instructions received from the computing device when the computer program product is executed.
